# FASCICULE DE BREVET EUROPEEN

(11) **EP 2 350 781 B1**
(45) Date de publication et mention de la délivrance du brevet: **24.05.2017**
(21) Numéro de dépôt: 09740122.8
(22) Date de dépôt: 20.10.2009
(51) Int. Cl.: G06F 3/033, H01H 25/06, H01H 9/16, H01H 9/18, H01H 3/02, G06F 3/0362, G06F 3/0354

(54) **BOUTON DE COMMANDE MULTIFONCTION**
MULTIFUNKTIONS-STEUERTASTE
MULTIFUNCTION CONTROL BUTTON

(30) Priorité: 20.10.2008 FR 0805779
(43) Date de publication de la demande: 03.08.2011
(73) Titulaire: DAV, 94000 Creteil (FR)
(72) Inventeur: LAURENT, Patrice, F-74106 Annemasse (FR); DROUIN, Xavier, F-74106 Annemasse (FR); VANHELLE, Stéphane, F-74106 Annemasse (FR)
(74) Mandataire: Pothmann, Karsten
(86) Numéro de dépôt international: PCT/EP2009/063756
(87) Numéro de publication internationale: WO 2010/046372

(56) Documents cités:
- DE-A1- 10 304 720
- US-A1- 2002 003 081
- US-A1- 2004 132 498
- US-A1- 2005 124 387
- US-A1- 2007 159 452
- US-A1- 2008 202 906
- HARMAN/KARDON: "HK 3385 Stereo Receiver Owner's Manual" 2007, HARMAN INTERNATIONAL INDUSTRIES, INC. , XP002563012 Extrait de l'Internet: URL:http://manuals.harman.com/HK/Owner%27s %20Manual/HK%203385%20OM%20lores.pdf> [extrait le 2010-01-13] pages 1,6,8 page 24, ligne 4 - ligne 10

## Description

La présente invention concerne un bouton de commande multifonction pour la commande de fonctions d'au moins un organe de véhicule automobile, notamment propre à être logé dans une planche de bord ou dans une façade rapportée de véhicule automobile. Plus précisément, un tel bouton de commande trouve une application avantageuse pour les commandes se trouvant au niveau de la console entre les deux sièges avant d'un véhicule automobile pour par exemple commander des fonctions de climatisation, d'un système audio, d'un système de téléphonie ou encore d'un système de navigation. L'invention peut aussi être appliquée dans une région du véhicule appelée le dôme qui se situe au niveau de l'emplacement habituel du rétroviseur intérieur, pour par exemple commander des lumières intérieures, un verrouillage central, un toit ouvrant, les feux de détresse ou les lumières d'ambiance. Ce bouton de commande peut également servir pour les commandes de lève-vitres, des commandes de positionnement des rétroviseurs extérieurs ou encore des commandes de déplacement de sièges motorisés. Dans le domaine automobile, les commandes de divers organes électriques sont réalisées classiquement par des commutateurs / interrupteurs. Toutefois, au vu du nombre croissant d'organes électriques à commander, des dispositifs de commande multifonction sont de plus en plus utilisés du fait des avantages ergonomiques qui en résultent. En effet, à partir d'un seul bouton de commande, réalisé par exemple sous forme d'un joystick, associé à un capteur d'affichage, on peut naviguer dans des menus déroulants de commande.

Les boutons de commande peuvent en outre comporter des moyens d'éclairage destinés à éclairer des zones choisies de la façade pour permettre au conducteur ou aux passagers du véhicule de repérer lesdits dispositifs et leurs positions respectives, en conduite de nuit. Ainsi, les boutons de commande doivent comporter, dans un espace réduit, un certain nombre de dispositifs assumant des fonctions spécifiques, en particulier de commande et d'éclairage.

Le document US2002/0003081 décrit par exemple un bouton de commande présentant de telles caractéristiques.

L'invention a notamment pour but de proposer un bouton de commande multifonction de structure simple pour la gestion de plusieurs commandes de fonctions dans un bouton de commande de faible encombrement et dont le confort ergonomique est amélioré.

L'invention propose à cet effet un bouton de commande multifonction selon la revendication 1.

Un tel bouton de commande permet la mise en oeuvre de deux modes de fonctionnement du capteur de commande tactile sélectionnés par la position axiale de la molette. Ainsi, un utilisateur peut notamment, lorsqu'il conduit, réaliser une ou plusieurs premières commandes, puis accéder à une autre série de commandes par le déplacement de la molette. Cet avantage ergonomique permet à l'utilisateur de rester plus concentré sur sa conduite.

Selon une ou plusieurs caractéristiques du bouton de commande prise seule ou en combinaison,
- le bouton de commande comporte une unité de traitement reliée audit capteur, configurée pour générer une commande en fonction d'une pression exercée sur ledit capteur,
- le bouton de commande comporte un indicateur de position axiale relié à l'unité de traitement, pour fournir à l'unité de traitement une indication de ladite position axiale de ladite molette,
- le bouton de commande comporte un capteur de position angulaire de ladite molette reliée à l'unité de traitement, configurée pour générer une commande en fonction d'une position angulaire de ladite molette,
- dans une première position axiale de sélection, l'unité de traitement est configurée pour détecter une commande de commutation sur ledit capteur et dans une deuxième position axiale de sélection, l'unité de traitement est configurée pour reconnaitre un mouvement sur ledit capteur ou pour sélectionner une fonction,
- dans une première position axiale de sélection, l'unité de traitement est configurée pour désactiver ledit capteur et dans une deuxième position axiale de sélection, l'unité de traitement est configurée pour reconnaître un mouvement sur ledit capteur ou pour sélectionner une fonction.
- le bouton de commande comporte un moyen de guidage en translation axiale de ladite molette entre ladite première et ladite deuxième position axiale de sélection et un moyen de guidage en rotation de ladite molette dans une position axiale de sélection,
- le support dudit capteur comporte un tronc cylindrique coaxial à ladite molette, dont une extrémité porte ledit capteur, le tronc cylindrique formant ledit moyen de guidage en translation axiale entre ladite première et ladite deuxième position axiale de sélection et formant ledit moyen de guidage en rotation,
- le bouton de commande comporte un moyen de blocage en rotation porté par ladite molette en regard d'un moyen de blocage en rotation correspondant porté par l'organe de commande, de manière que les moyens de blocage en rotation coopèrent uniquement dans une position axiale de sélection, pour bloquer la rotation de ladite molette,
- le moyen de blocage en rotation porté par ladite molette comporte une bague crantée en regard d'une bague crantée correspondante portée par l'organe de commande,
- le bouton de commande comporte un moyen d'indexage en rotation porté par ladite molette en regard d'un moyen d'indexage en rotation correspondant porté par l'organe de commande, de manière que les moyens d'indexage en rotation coopèrent dans une position axiale de sélection, pour indexer la rotation de ladite molette,
- les moyens d'indexage en rotation comportent au moins une lame élastique en regard d'une pluralité de dents correspondantes, de manière que la lame élastique soit sollicitée à l'encontre des dents dans une position axiale de sélection,
- le bouton de commande comporte un moyen de maintien porte par ladite molette en regard d'un moyen de maintien correspondant porté par l'organe de commande, de manière que les moyens de maintien coopèrent dans ladite deuxième position distale, pour maintenir ladite molette à l'écart du socle,
- un moyen de maintien comporte au moins un aimant coopérant avec une surface à aimanter du moyen de maintien correspondant dans la deuxième position distale,

D'autres avantages et caractéristiques apparaîtront à la lecture de la description de l'invention, ainsi que sur les figures annexées sur lesquelles:
- la figure 1 représente une vue en éclaté d'un bouton de commande multifonction,
- la figure 2 représente un doigt d'un utilisateur sur une vue en coupe du bouton de commande de la figure 1 à l'état assemblé, dans une première position proximale du socle et,
- la figure 3 est une vue analogue à la figure 2, dans une deuxième position distale du socle.

Sur ces figures, les éléments identiques portent les mêmes numéros de référence. Pour la description des figures, on désigne la partie « inférieure » du bouton multifonction, la partie située du côté du socle.

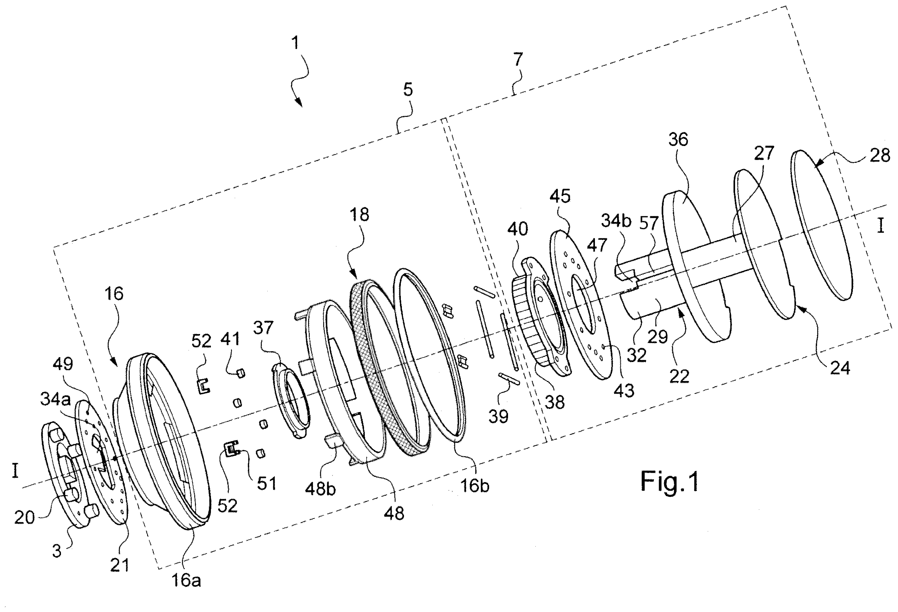

La figure 1 représente un bouton de commande 1 comportant un socle 3, une molette de commande 5 montée rotative sur le socle 3 autour d'un axe de rotation I-I et un organe de commande 7 traversant la molette 5 coaxialement et monté fixe sur le socle 3.

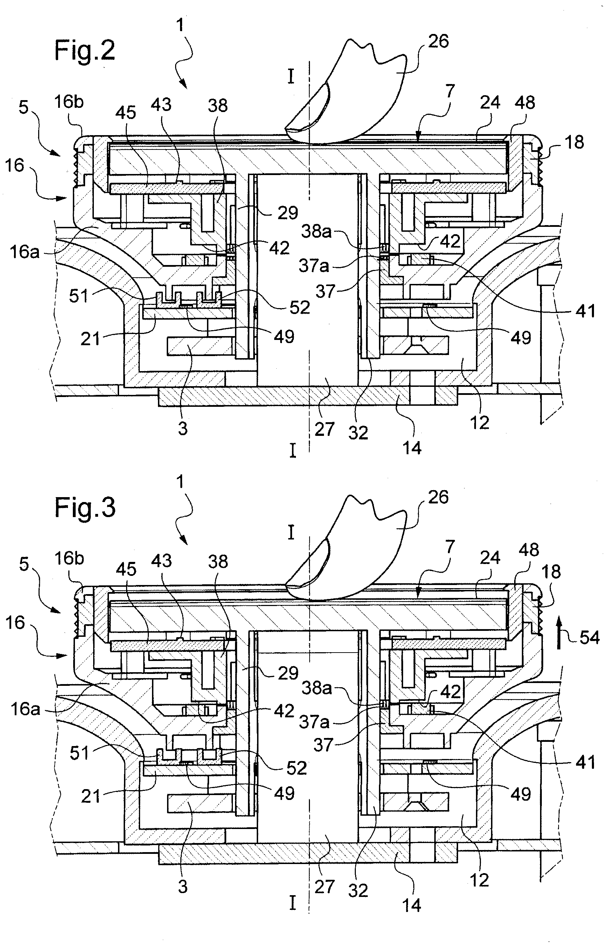

Le socle 5 est destiné à être inséré dans un logement 12 prévu à cet effet dans un châssis 14 par exemple d'un tableau de commande d'un véhicule automobile (figures 2 et 3).

La molette 5 est déplaçable entre une première et une deuxième position axiale de sélection, par exemple une première position proximale du socle (figure 2) dans laquelle la molette 5 est mobile en rotation et une deuxième position distale (figure 3) du socle 3 dans laquelle la molette 5 est déportée axialement du socle 3, c'est-à-dire éloignée du socle 3 dans l'axe de rotation I-I par rapport à la première position proximale (voir direction de la flèche 54 sur la figure 3). La molette 5 est par exemple bloquée en rotation dans la deuxième position.

La molette 5 comporte un support de bague 16 par exemple de forme conique et une bague de préhension 18, disposée à l'extérieur du support de bague 16, de manière à être manipulée en rotation par un utilisateur. La bague de préhension 18 comporte par exemple une surface externe moletée.

Le support de bague 16 est par exemple formé en deux pièces 16a, 16b, conformées pour s'assembler entre elles et à la bague de préhension 18, par exemple par des moyens de fixation amovibles, tels que des moyens d'encliquetage. On peut aussi envisager que la bague de préhension 18 et le support de bague 16 soient formés en une seule pièce.

Le bouton multifonction 1 comporte une première carte à circuit imprimé 21, montée entre le socle 3 et la molette 5. La carte à circuit imprimé 21 est par exemple montée solidairement au châssis 14 de manière à maintenir le socle 3 et l'organe de commande 7 fixes (voir figure 2). En outre, le socle 3 peut comporter des plots de réglage 20 (quatre dans cet exemple) pour le réglage en hauteur du support de bague 16. Les plots de réglage 20 peuvent comporter des billes en extrémité pour limiter le frottement avec le support de bague 16.

L'organe de commande 7 comporte un support de capteur 22 et un capteur de commande tactile 24 sensible à une pression d'appui exercée par le doigt 26 d'un utilisateur ou par la pointe d'un stylet sur le capteur 24, le capteur 24 étant monté sur le support de capteur 22.

Le capteur de commande tactile 24 (dénomination anglaise "Digitizer pad") comporte un capteur à surface tactile par exemple utilisant des résistances sensibles à la pression (également connu sous le nom capteur FSR pour « Force Sensing Resistor ») permettant de détecter un appui simple d'un utilisateur et, en fonction de la position de l'appui détecté et/ou du déplacement ultérieur de cet appui sur la surface, de déclencher un type particulier de commande.

Mieux visible sur la figure 1, le capteur 24 présente par exemple la forme d'un disque et comporte une sortie de fils électriques par exemple sous forme d'une nappe 27, pour notamment permettre l'alimentation du capteur 24 et la transmission des signaux de sorties du capteur 24.

Le bouton 1 peut également comporter un revêtement de protection 28 et de décoration, présentant par exemple une forme correspondante au capteur 24 pour décorer et protéger le capteur de commande tactile 24 d'éventuelles agressions extérieures.

Le support de capteur 22 comporte par exemple un tronc cylindrique 29 monté coaxialement à l'axe de rotation I-I dans un orifice correspondant de la molette 5. Le tronc cylindrique 29 est de préférence creux, de manière à permettre le passage des fils électriques en nappe 27 du capteur 24.

Une extrémité 32 du tronc cylindrique 29 traverse la première carte à circuit imprimé 21 et est fixée au socle 3. La carte à circuit imprimé 21 et le support de capteur 22 peuvent respectivement présenter des moyens détrompeurs 34a, 34b coopérant pour orienter l'assemblage de l'organe de commande 7 au socle 3 (figure 1).

L'autre extrémité du tronc cylindrique 29 présente par exemple un plateau 36 conformé pour porter le capteur 24. On peut prévoir une fente longitudinale 57 dans le tronc 29 pour le passage de la nappe 27 du capteur 24, qui peut alors être connectée à la première carte à circuit imprimé 21. La connectique de la carte imprimée 21 peut être orientée par les moyens détrompeurs 34a, 34b.

L'organe de commande 7 traverse la molette 5 coaxialement à l'axe de rotation I-I.

Le bouton de commande 1 peut comporter en outre des moyens de blocage en rotation pour bloquer la rotation de la molette 5 dans une des positions axiales de sélection et des moyens d'indexage en rotation de la molette 5 dans l'autre position axiale, des moyens de maintien pour maintenir la molette 5 à l'écart une deuxième position distale, des moyens de guidage en translation et en rotation de la molette 5 et des moyens de butée du capteur 24 dans une deuxième position distale de la molette 5.

Ainsi, le bouton de commande 1 peut comporter un moyen de blocage en rotation porté par la molette 5 en regard d'un moyen de blocage en rotation correspondant porté par l'organe de commande 7, de manière que les moyens de blocage en rotation coopèrent uniquement dans la deuxième position distale, pour bloquer la rotation de la molette.

Par exemple et comme mieux visible sur la figure 1, le moyen de blocage en rotation porté par la molette 5 comporte une bague crantée 37 en regard d'une bague crantée correspondante 38 portée par l'organe de commande 7.

Les bagues 37, 38 sont coaxiales à l'axe de rotation I-I et sont configurées pour coopérer uniquement dans la deuxième position distale. Ainsi, sur la figure 2, la molette 5 est dans la première position proximale du socle 3, les bagues 37, 38 sont écartées et ne coopèrent pas de sorte que la molette 5 est mobile en rotation. En revanche, sur la figure 3, la molette 5 est dans la deuxième position distale du socle 3, les crans 37a, 38b des bagues 37, 38 sont alors rapprochées et coopèrent de sorte que l'organe de commande 7 bloque la rotation de la molette 5.

Le bouton de commande 1 peut en outre comporter un moyen d'indexage en rotation porté par la molette 5 en regard d'un moyen d'indexage en rotation correspondant porté par l'organe de commande 7, de manière que les moyens d'indexage en rotation coopèrent dans la première position proximale, pour indexer la rotation de la molette 5.

Par exemple, les moyens d'indexage en rotation comportent au moins une lame élastique 39 en regard d'une pluralité de dents correspondantes 40, de manière que la lame élastique 39 soit sollicitée à l'encontre des dents 40 dans la première position proximale.

Dans l'exemple représenté sur les figures, les moyens d'indexage en rotation comportent quatre lame élastique 39 portées par la molette 5 en regard d'une pluralité de dents correspondants 40 portées par la surface extérieure de la bague d'indexage 38 de l'organe de commande 7.

Le bouton de commande 1 peut également comporter un moyen de maintien porté par la molette 5 en regard d'un moyen de maintien correspondant porté par l'organe de commande 7, de manière que les moyens de maintien coopèrent dans la deuxième position distale, pour maintenir la molette 5 à l'écart du socle 3.

Par exemple, un moyen de maintien comporte au moins un aimant 41 coopérant avec une surface à aimanter 42 du moyen de maintien correspondant dans la deuxième position distale (figure 3). La surface à aimanter 42 est par exemple métallique.

Dans l'exemple représenté sur les figures, les moyens de maintien comportent quatre aimants 41 portées par un support de molette 16a en regard de la surface à aimanter 42 portée par la surface inférieure de la bague d'indexage 38 de l'organe de commande 7.

Le bouton de commande 1 peut comporter en outre un moyen de guidage en translation axiale de la molette 5 entre la première et la deuxième position axiale de sélection et un moyen de guidage en rotation de la molette 5 dans la première position proximale. Dans cet exemple de réalisation, le tronc cylindrique 29 forme un moyen de guidage en translation axiale selon l'axe de rotation I-I. En outre, le tronc cylindrique 29 forme un moyen de guidage en rotation dans la première position proximale de la molette 5.

Selon un exemple de réalisation, la bague de préhension 18 est saillante au capteur 24 dans la deuxième position distale (figure 3) de manière à former une butée délimitant la surface de commande tactile du capteur 24.

En outre, la bague de préhension 18 peut affleurer la surface de commande tactile du capteur 24 dans la première position proximale (figure 2).

Selon un exemple de réalisation, le plateau 36 du support de capteur 22 et le capteur 24 sont réalisés en un matériau transmettant la lumière, tel que transparent ou translucide, et l'organe de commande 7 comporte au moins un premier moyen d'éclairage 43, pour le rétroéclairage du capteur 24.

Pour cela, l'organe de commande 7 comporte par exemple une deuxième carte à circuit imprimé 45 disposée entre le support de capteur 22 et la molette 5, portant les moyens d'éclairage 43. La deuxième carte à circuit imprimé 45 présente la forme d'un anneau dont l'orifice central 47 est coaxial à l'axe de rotation I-I pour permettre le passage du tronc cylindrique 29 du support de capteur 22.

En outre, on peut prévoir que la molette 5 comporte une couronne interne 48 réalisée en un matériau transmettant de la lumière, tel que translucide ou transparent, disposée dans le support de bague 16, concentriquement à la bague de préhension 18, à l'arrière de la surface externe moletée. La première carte à circuit imprimé 21 du bouton 1 comporte alors au moins un deuxième moyen d'éclairage 49 pour le rétroéclairage de la couronne interne 48. En outre, la couronne interne 48 peut comporter des guides de lumière 48b (figure 1) en matériau translucide ou transparent pour guider la lumière derrière la couronne interne 48.

Les premier et deuxième moyens d'éclairage 43, 49 comportent par exemple des diodes électroluminescentes.

Ainsi, lorsque la molette 5 est dans la deuxième position distale du socle 3, la couronne interne 48 devient visible par l'utilisateur et peut être rétroclairée par les deuxièmes moyens d'éclairage 49 de sorte que l'utilisateur perçoive un éclairage périphérique du capteur tactile 24 et soit donc informé d'un premier mode de fonctionnement du bouton 1, par exemple dans lequel un mouvement peut être reconnu par la surface tactile du capteur 24.

En outre, lorsque la molette 5 est dans la première position proximale du socle 3, on peut rétroéclairer le bouton 1 par les premiers moyens d'éclairage 43 pour que l'utilisateur perçoive un halo lumineux autour du bouton 1, l'informant d'un deuxième mode de fonctionnement du bouton multifonction, par exemple dans lequel le capteur 24 est désactivé.

Le bouton 1 peut en outre comporter une unité de traitement (non représentée) reliée au capteur de commande tactile 24 via la nappe 27. L'unité est alors configurée pour générer une commande en fonction d'une pression exercée sur le capteur 24 dans la première position proximale distincte d'une commande générée en fonction d'une pression exercée sur le capteur 24 dans la deuxième position distale.

Par ailleurs, le bouton 1 peut comporter en outre un indicateur de position axiale relié à l'unité de traitement, pour fournir à l'unité de traitement une indication de la position axiale de ladite molette et/ou un capteur de position angulaire de la molette reliée à l'unité de traitement, configurée pour générer une commande en fonction de la position angulaire de la molette dans la première position proximale.

L'indicateur de position axiale et/ou le capteur de position angulaire, peuvent comporter un capteur optique. Les capteurs optiques comportent par exemple une cellule photoélectrique en forme de fourche dont l'interstice peut être mis en communication avec une surface optique à détecter, par exemple une surface réfléchissante. En alternative, l'indicateur de position axiale et/ou le capteur de position angulaire, peuvent comporter un capteur à effet Hall.

Dans l'exemple illustré par les figures, le bouton 1 comporte un premier capteur optique 51 pour l'indicateur de position axiale et deux deuxièmes capteurs optiques 52 pour les capteurs de position angulaire. Les capteurs optiques 51, 52 sont portés par la première carte à circuit imprimée 21 en regard de surfaces optiques portées par une surface inférieure mobile du support de molette 16a.

L'unité de traitement est alors reliée à l'indicateur de position axiale 51 et/ou aux capteurs de position angulaire 52 de ladite molette 5, via la première carte à circuit imprimé 21. L'unité est alors configurée pour générer une commande en fonction de la position axiale et angulaire de la molette 5 dans la première position proximale.

Selon un premier exemple d'application, l'unité de traitement est configurée pour détecter une commande de commutation sur le capteur de commande tactile 24 dans une première position et pour reconnaître un mouvement sur ledit capteur 24 ou pour sélectionner une fonction dans une deuxième position. Le mouvement est défini par un tracé sur la surface du capteur 24, par exemple par le doigt d'un utilisateur, dont le sens et/ou la direction du déplacement ou le caractère reconnu (comme un chiffre ou une lettre) permet de sélectionner une fonction.

Selon un deuxième exemple d'application, l'unité de traitement est configurée pour désactiver le capteur de commande tactile 24 dans une première position, c'est-à-dire que l'unité de traitement ne génère pas de commande relative à une détection d'appui sur le capteur 24. Dans une deuxième position, l'unité de traitement est configurée pour reconnaître un mouvement sur ledit capteur 24 ou pour sélectionner une fonction.

En fonctionnement, dans une première position proximale du socle (figure 2), les bagues 37, 38 ne coopèrent pas de sorte que la molette 5 soit mobile en rotation et la bague de préhension 18 puisse être manipulée en rotation par un utilisateur. La position de la molette est indexée par les moyens d'indexage 38, 39 et détectée par les capteurs de position angulaire 52. L'utilisateur perçoit alors un halo lumineux autour du bouton 1, l'informant du mode de fonctionnement du bouton multifonction. La rotation de la molette 5 permet alors par exemple la commande du réglage du volume sonore de l'autoradio et un appui sur le capteur 24 permet alors la commande du mode « mute », par une simple pression, ou double pression, pour arrêter temporairement le volume.

Pour passer dans une deuxième position distale du socle 3, l'utilisateur tire sur la molette 5 dans la direction représentée par la flèche 54 sur la figure 3, de manière à déporter axialement la molette 5 du socle 3. La molette 5 est alors guidée en translation par le tronc cylindrique 29 et détectée par l'indicateur de position axiale 51.

Les crans 37a, 38b des bagues 37, 38 des moyens de blocage sont alors rapprochés et coopèrent de sorte que l'organe de commande 7 bloque la rotation de la molette 5. Les aimants 41 des moyens de maintien sont alors également rapprochés des surfaces à aimanter 42 et coopèrent pour maintenir la molette 5 éloignée du socle 3 dans cette deuxième position distale.

La bague de préhension 18 est alors saillante au capteur 24 dans la deuxième position distale et forme une butée délimitant la surface de commande tactile dudit capteur 24. La couronne interne 48 devient visible à l'utilisateur l'informant du changement du mode de fonctionnement, dans lequel par exemple, un mouvement peut être détecté sur la surface tactile du capteur 24 pour la commande d'une nouvelle fonction.

Pour revenir à la première position proximale du socle 3, l'utilisateur pousse sur la molette 5 dans la direction opposée à la flèche 54, de manière à éloigner les aimants 41 des surfaces à aimanter 42 et les crans 37a, 38a des bagues 37, 38 des moyens de blocage.

Ainsi, le bouton de commande 1 permet la gestion de plusieurs commandes de fonctions dans un bouton de commande de faible encombrement et dont le confort ergonomique est amélioré.

## Revendications

1. Bouton de commande multifonction comportant un socle (3), une molette de commande (5) montée rotative sur le socle (3) autour d'un axe de rotation (I-I) et un organe de commande (7) monté fixe sur le socle (3), traversant ladite molette (5) de façon coaxiale, ladite molette (5) étant déplaçable entre une première et une deuxième position axiale de sélection, ladite molette (5) pouvant prendre une première position proximale dans laquelle ladite molette (5) est mobile en rotation et une deuxième position distale dans laquelle ladite molette (5) est déportée axialement du socle (3), **caractérisé en ce que** l'organe de commande (7) comporte un capteur de commande tactile (24) sensible à une pression d'appui exercée sur ledit capteur (24) pour qu'un appui sur ledit capteur (24) permette la commande d'une fonction distincte selon ladite position axiale de sélection de ladite molette (5),
**en ce que** dans ladite deuxième position distale, ladite molette est bloquée en rotation,
**en ce que** ladite molette (5) comporte une bague de préhension (18) saillante audit capteur (24) dans ladite deuxième position distale de manière à former une butée délimitant la surface de commande tactile dudit capteur (24),
**en ce qu'**un plateau d'un support de capteur (22) et ledit capteur (24) sont réalisés en un matériau transmettant de la lumière et **en ce que** l'organe de commande (7) comporte au moins un premier moyen d'éclairage (43) pour le rétroéclairage dudit capteur (24),
**en ce que** ladite molette (5) comporte une couronne interne (48) concentrique à la bague de préhension (18) et réalisée en un matériau transmettant de la lumière et **en ce que** ledit bouton comporte en outre au moins un deuxième moyen d'éclairage (49) pour le rétroéclairage de ladite couronne (48),
de sorte que, lorsque la molette (5) est dans la deuxième position distale du socle (3), la couronne interne (48) est rétroéclairée par le deuxième moyen d'éclairage (49) et, lorsque la molette (5) est dans la première position proximale du socle (3), ledit capteur est rétroéclairé par le premier moyen d'éclairage (43).

2. Bouton de commande multifonction selon la revendication 1, **caractérisé en ce qu'**il comporte une unité de traitement reliée audit capteur (24), configurée pour générer une commande en fonction d'une pression exercée sur ledit capteur (24) et un indicateur de position axiale relié à l'unité de traitement, pour fournir à l'unité de traitement une indication de ladite position axiale de ladite molette (5).

3. Bouton de commande selon la revendication 2, **caractérisé en ce que** dans ladite première position axiale de sélection, l'unité de traitement est configurée pour détecter une commande de commutation sur ledit capteur (24) et dans ladite deuxième position axiale de sélection, l'unité de traitement est configurée pour reconnaitre un mouvement sur ledit capteur (24) ou pour sélectionner une fonction.

4. Bouton de commande selon la revendication 2, **caractérisé en ce que** dans ladite première position axiale de sélection, l'unité de traitement est configurée pour désactiver ledit capteur (24) et dans ladite deuxième position axiale de sélection, l'unité de traitement est configurée pour reconnaitre un mouvement sur ledit capteur (24) ou pour sélectionner une fonction.

5. Bouton de commande selon l'une quelconque des revendications précédentes, **caractérisé en ce qu'**il comporte un moyen de blocage en rotation porté par ladite molette (5) en regard d'un moyen de blocage en rotation correspondant porté par l'organe de commande (7), de manière que les moyens de blocage en rotation coopèrent uniquement dans ladite deuxième position distale, pour bloquer la rotation de ladite molette (5).

6. Bouton de commande selon la revendication précédente, **caractérisé en ce que** le moyen de blocage en rotation porté par ladite molette (5) comporte une bague crantée (37) en regard d'une bague crantée (38) correspondante portée par l'organe de commande (7), lesdites bagues (37, 38) étant configurées pour coopérer uniquement dans ladite deuxième position distale.

7. Bouton de commande selon l'une quelconque des revendications précédentes, **caractérisé en ce qu'**il comporte un moyen de maintien porté par ladite molette (5) en regard d'un moyen de maintien correspondant porté par l'organe de commande (7), de manière que les moyens de maintien coopèrent dans ladite deuxième position distale, pour maintenir ladite molette (5) à l'écart du socle (3).

8. Bouton de commande selon la revendication précédente, **caractérisé en ce qu'**un moyen de maintien comporte au moins un aimant (41) coopérant avec une surface à aimanter (42) du moyen de maintien correspondant dans la deuxième position distale.

## Patentansprüche

1. Multifunktions-Steuertaste, die einen Sockel (3), ein Steuerrädchen (5), das um eine Drehachse (I-I) drehbar auf den Sockel (3) montiert ist, und ein Steuerorgan (7) aufweist, das ortsfest auf den Sockel (3) montiert ist, das Rädchen (5) koaxial durchquert, wobei das Rädchen (5) zwischen einer ersten und einer zweiten axialen Auswahlstellung verschiebbar ist, wobei das Rädchen (5) eine erste proximale Stellung, in der das Rädchen (5) drehbeweglich ist, und eine zweite distale Stellung einnehmen kann, in der das Rädchen (5) axial zum Sockel (3) versetzt ist, **dadurch gekennzeichnet, dass** das Steuerorgan (7) einen Berührungssteuerungssensor (24) aufweist, der für einen auf den Sensor (24) ausgeübten Auflagedruck empfindlich ist, damit ein Druck auf den Sensor (24) die Steuerung einer unterschiedlichen Funktion je nach der axialen Auswahlstellung des Rädchens (5) erlaubt,
dass in der zweiten distalen Stellung das Rädchen in Drehung blockiert ist,
dass das Rädchen (5) einen Greifring (18) aufweist, der in der zweiten distalen Stellung zum Sensor (24) vorsteht, um einen Anschlag zu bilden, der die berührungsempfindliche Steuerfläche des Sensors (24) begrenzt,
dass eine Platte eines Sensorträgers (22) und der Sensor (24) aus einem Licht übertragenden Material hergestellt sind, und dass das Steuerorgan (7) mindestens eine erste Beleuchtungseinrichtung (43) zur Hintergrundbeleuchtung des Sensors (24) aufweist,
dass das Rädchen (5) einen inneren Kranz (48) konzentrisch zum Greifring (18) und aus einem Licht übertragenden Material hergestellt aufweist, und dass die Taste außerdem mindestens eine zweite Beleuchtungseinrichtung (49) zur Hintergrundbeleuchtung des Kranzes (48) aufweist, so dass, wenn das Rädchen (5) in der zweiten distalen Stellung zum Sockel (3) ist, der innere Kranz (48) von der zweiten Beleuchtungseinrichtung (49) hinterleuchtet wird, und wenn das Rädchen (5) in der ersten proximalen Stellung zum Sockel (3) ist, der Sensor von der ersten Beleuchtungseinrichtung (43) hinterleuchtet wird.

2. Multifunktions-Steuertaste nach Anspruch 1, **dadurch gekennzeichnet, dass** sie eine mit dem Sensor (24) verbundene Verarbeitungseinheit, die konfiguriert ist, eine Steuerung abhängig von einem auf den Sensor (24) ausgeübten Druck zu erzeugen, und einen mit der Verarbeitungseinheit verbundenen Anzeiger für die axiale Stellung aufweist, um der Verarbeitungseinheit eine Anzeige der axialen Stellung des Rädchens (5) zu liefern.

3. Steuertaste nach Anspruch 2, **dadurch gekennzeichnet, dass** in der ersten axialen Auswahlstellung die Verarbeitungseinheit konfiguriert ist, eine Umschaltsteuerung auf dem Sensor (24) zu erfassen, und in der zweiten axialen Auswahlstellung die Verarbeitungseinheit konfiguriert ist, eine Bewegung auf dem Sensor (24) zu erkennen oder eine Funktion auszuwählen.

4. Steuertaste nach Anspruch 2, **dadurch gekennzeichnet, dass** in der ersten axialen Auswahlstellung die Verarbeitungseinheit konfiguriert ist, den Sensor (24) zu deaktivieren, und in der zweiten axialen Auswahlstellung die Verarbeitungseinheit konfiguriert ist, eine Bewegung auf dem Sensor (24) zu erkennen oder eine Funktion auszuwählen.

5. Steuertaste nach einem der vorhergehenden Ansprüche, **dadurch gekennzeichnet, dass** sie eine Drehblockiereinrichtung aufweist, die vom Rädchen (5) gegenüber einer vom Steuerorgan (7) getragenen entsprechenden Drehblockiereinrichtung getragen wird, damit die Drehblockiereinrichtungen nur in der zweiten distalen Stellung zusammenwirken, um die Drehung des Rädchens (5) zu blockieren.

6. Steuertaste nach dem vorhergehenden Anspruch, **dadurch gekennzeichnet, dass** die vom Rädchen (5) getragene Drehblockiereinrichtung einen geriffelten Ring (37) gegenüber einem entsprechenden geriffelten Ring (38) aufweist, der vom Steuerorgan (7) getragen wird, wobei die Ringe (37, 38) konfiguriert sind, nur in der zweiten distalen Stellung zusammenzuwirken.

7. Steuertaste nach einem der vorhergehenden Ansprüche, **dadurch gekennzeichnet, dass** sie eine vom Rädchen (5) getragene Halteeinrichtung gegenüber einer vom Steuerorgan (7) getragenen entsprechenden Halteeinrichtung aufweist, so dass die Halteeinrichtungen in der zweiten distalen Stellung zusammenwirken, um das Rädchen (5) in Abstand zum Sockel (3) zu halten.

8. Steuertaste nach dem vorhergehenden Anspruch, **dadurch gekennzeichnet, dass** eine Halteeinrichtung mindestens einen Magnet (41) aufweist, der mit einer zu magnetisierenden Fläche (42) der entsprechenden Halteeinrichtung in der zweiten distalen Stellung zusammenwirkt.

## Claims

1. Multifunction control button comprising a base (3), a control thumbwheel (5) mounted to rotate on the base (3) about a rotation axis (I-I) and a control member (7) fixedly mounted on the base (3), passing through said thumbwheel (5) coaxially, said thumbwheel (5) being able to be displaced between a first axial selection position and a second axial selection position, said thumbwheel (5) being able to assume a first proximal position in which said thumbwheel (5) is rotationally mobile and a second distal position in which said thumbwheel (5) is axially distanced from the base (3), **characterized in that** the control member (7) comprises a touch control sensor (24) sensitive to a contact pressure exerted on said sensor (24) for a contact on said sensor (24) to make it possible to control a distinct function according to said axial selection position of said thumbwheel (5),
**in that**, in said second distal position, said thumbwheel is rotationally blocked,
**in that** said thumbwheel (5) comprises a gripping ring (18) protruding from said sensor (24) in said second distal position so as to form an abutment delimiting the touch control surface of said sensor (24),
**in that** a sensor support plate (22) and said sensor (24) are made of a material transmitting light and **in that** the control member (7) comprises at least one first lighting means (43) for backlighting said sensor (24),
**in that** said thumbwheel (5) comprises an internal crown ring (48) concentric to the gripping ring (18) and produced in a material transmitting light and **in that** said button further comprises at least one second lighting means (49) for backlighting said crown ring (48), such that, when the thumbwheel (5) is in the second distal position of the base (3), the internal crown ring (48) is backlit by the second lighting means (49) and, when the thumbwheel (5) is in the first proximal position of the base (3), said sensor is backlit by the first lighting means (43).

2. Multifunction control button according to Claim 1, **characterized in that** it comprises a processing unit linked to said sensor (24), configured to generate a command based on a pressure exerted on said sensor (24) and an axial position indicator linked to the processing unit, to provide the processing unit with an indication of said axial position of said thumbwheel (5).

3. Control button according to Claim 2, **characterized in that** in said first axial selection position, the processing unit is configured to detect a switching command on said sensor (24) and in said second axial selection position, the processing unit is configured to recognize a movement on said sensor (24) or to select a function.

4. Control button according to Claim 2, **characterized in that** in said first axial selection position, the processing unit is configured to deactivate said sensor (24) and in said second axial selection position, the processing unit is configured to recognize a movement on said sensor (24) or to select a function.

5. Control button according to any one of the preceding claims, **characterized in that** it comprises a rotation blocking means borne by said thumbwheel (5) facing a corresponding rotation blocking means borne by the control member (7), so that the rotation blocking means cooperate only in said second distal position, to block the rotation of said thumbwheel (5).

6. Control button according to the preceding claim, **characterized in that** the rotation blocking means borne by said thumbwheel (5) comprises a serrated ring (37) facing a corresponding serrated ring (38) borne by the control member (7), said rings (37, 38) being configured to cooperate only in said second distal position.

7. Control button according to any one of the preceding claims, **characterized in that** it comprises a holding means borne by said thumbwheel (5) facing a corresponding holding means borne by the control member (7), such that the holding means cooperate in said second distal position, to hold said thumbwheel (5) away from the base (3).

8. Control button according to the preceding claim, **characterized in that** a holding means comprises at least one magnet (41) cooperating with a surface to be magnetized (42) of the corresponding holding means in the second distal position.
